(19) Europäisches Patentamt
European Patent Office
Office européen des brevets

(11) **EP 3 779 757 B1**

(12) **EUROPEAN PATENT SPECIFICATION**

(45) Date of publication and mention
of the grant of the patent:
**04.10.2023  Bulletin 2023/40**

(51) International Patent Classification (IPC):
***G06F 21/62*** *(2013.01)*

(21) Application number: **20190777.1**

(52) Cooperative Patent Classification (CPC):
**G06F 21/6254; G06F 21/6245**

(22) Date of filing: **12.08.2020**

(54) **SIMULATED RISK CONTRIBUTIONS**

SIMULIERTE RISIKOBEITRÄGE

CONTRIBUTIONS SIMULÉES AUX RISQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.08.2019  US 201962885435 P**

(43) Date of publication of application:
**17.02.2021  Bulletin 2021/07**

(73) Proprietor: **Privacy Analytics Inc.**
**Ottawa, Ontario K1P 5J6 (CA)**

(72) Inventors:
 • **Di Valentino, David Nicholas Maurice**
   **Ottawa, Ontario K1S 1X7 (CA)**
 • **Mian, Muhammed Oneeb Rehman**
   **Ottawa, Ontario K2P 2E6 (CA)**

(74) Representative: **Blumbach · Zinngrebe**
**Patentanwälte PartG mbB**
**Elisabethenstrasse 11**
**64283 Darmstadt (DE)**

(56) References cited:
**US-A1- 2017 103 232     US-A1- 2017 177 907**
**US-A1- 2018 114 037**

## Description

### CROSS-REFERENCE TO RELATED APPLICATION

This applications claims priority to U.S. Provisional Application Serial No. 62/885,435 filed August 12, 2019 entitled "Simulated Risk Contributions".

### TECHNICAL FIELD

The present disclosure relates to datasets containing personally identifiable or confidential information and in particular to risk assessment of the datasets.

### BACKGROUND

Personal information is being continuously captured in a multitude of electronic databases. Details about health, financial status and buying habits are stored in databases managed by public and private sector organizations. These electronic databases contain information about millions of people, which can provide valuable research, epidemiologic and business insight. For example, examining a drugstore chain's prescriptions can indicate where a flu outbreak is occurring. To extract or maximize the value contained in these databases, data custodians must often provide outside organizations access to their data. In order to protect the privacy of the people whose data is being analyzed, a data custodian will "de-identify" or "anonymize" information before releasing it to a third-party, whether that be through data transformations or the generation of synthetic data from personal or confidential data. An important type of de-identification ensures that data cannot be traced to the person about whom it pertains, this protects against 'identity disclosure'. However, attribute or inferential disclosure can also be prevented, where applicable, to protect confidentiality using a range of technical disclosure-risk or privacy metrics.

When de-identifying records, many people assume that removing names and addresses (direct identifiers) is sufficient to protect the privacy of the persons whose data is being released. The problem of de-identification involves those personal details that are not obviously identifying. These personal details, known as quasi-identifiers (QIs), include the person's age, sex, postal code, profession, ethnic origin and income, financial transactions, medical procedures (to name a few). To be able to de-identify data the assessment of the risk of re-identification is required to be determined. Confidential attributes may also be captured (as QIs or as separate fields) when confidentiality is to be protected, limiting disclosure risk to an acceptable level. Further, the size of the datasets can contain a vast number of entries requiring a computer processor to be able analyze the data, to de-identify, confidentialize, or generate synthetic data.

Accordingly, systems and methods that enable improved risk assessment remains highly desirable. US2018114037A1 discloses estimating re-identification risk of a single individual in a dataset. The individual, subject or patient is described by a data subject profile such as a record in the dataset. A population distribution is retrieved from a storage device, the population distribution is determined by one or more quasi-identifying fields identified in the data subject profile. An information score is then assigned to each quasi-identifying (QI) value of the one or more quasi-identifying fields associated with the data subject profile. The assigned information scores of the quasi-identifying values for the data subject profile are aggregated into an aggregated information value. An anonymity value is then calculated from the aggregated information value and a size of a population associated with the dataset. A re-identification metric for the individual from the anonymity value is then calculated.

US2017177907A1 specifies a method that involves identifying direct identifiers in a data set by a processor coupled to a memory. Quasi-identifiers are identified in the data set. A first probability of re-identification is calculated from the direct identifiers. A second probability of re-identification is calculated from the quasi-direct identifiers. The data set is perturbed if the first probability or second probability exceeds a respective predetermined threshold to produce a perturbed data set. The perturbed data set is provided to a requestor through a user-facing communication channel.

US2017103232A1 discloses a method to produce an anonymized cohort, members of the cohort having less than a predetermined risk of re-identification. The method includes receiving a data query of requested traits to request in an anonymized cohort, querying a data source to find records that possess at least some of the traits, forming a dataset from at least some of the records, and calculating an anonymity histogram of the dataset. For each patient record within the dataset, the method anonymizes the dataset by calculating using a threshold selector whether a predetermined patient profile within the dataset should be perturbed, calculating using a value selector whether a value within the indicated patient profile should be perturbed, and suppressing an indicated value within the indicated patient profile. The anonymized dataset then is returned.

## SUMMARY

The described embodiments are to be considered only as illustrative and not restrictive. The scope of the invention is defined by the appended claims, the dependent claims define further embodiments of the invention.

In accordance with an aspect of the present disclosure there is provided a system and method executed by a processor for estimating disclosure risk (including, for example, one or more of identification, attribution, or inference) of a single individual or entity's information in a dataset, the individual or entity described by a data subject profile in the dataset, the method comprising: retrieving a population distribution from a storage device, the population distribution determined by one or more quasi-identifying or confidential fields identified in the data subject profile; assigning an information score to each quasi-identifying or confidential value of the one or more quasi-identifying or confidential fields associated with the data subject profile; aggregating the assigned information scores of the quasi-identifying or confidential values for the data subject profile into an aggregated disclosure value; calculating an anonymity or confidentiality value from the aggregated information value and a size of a population associated with the dataset; and calculating disclosure metric for the individual or entity from the anonymity or confidentiality value.

In a further embodiment of the system and method, the information score is defined by a number of information binary bits provided by the quasi-identifying value.

In a further embodiment of the system and method, an aspect calculating an anonymity value from an information score is defined as $a = reid\_bits - given\_bits$ where reid_bits is a number of re-identification bits calculated from the size of the population using $reid\_bits = log_2(population)$ and given_bits describes the aggregated information value available for re-identification of the data subject profile.

In a further embodiment of the system and method, the population distribution is a single variable or multi-variable distribution, which maps value to a probability of an individual or entity having that value.

In a further embodiment of the system and method, further comprising creating an aggregate result of a plurality of re-identification metric for a plurality of data subject profiles on a larger dataset.

In a further embodiment of the system and method, creating the aggregate result for the data subjects in a single value result.

In a further embodiment of the system and method, the aggregate result is one of a type of disclosure risk metric, or an arithmetic average.

In a further embodiment of the system and method, wherein the aggregate result is a multi-valued summary.

In a further embodiment of the system and method, wherein the multi-valued summary is an array or matrix of results.

In a further embodiment of the system and method, wherein creating the aggregate information scores is a summation of information scores for the subject.

In a further embodiment of the system and method, wherein the information scores in each data subject profile is summed to obtain a total information value contained in all child records for a given parent data subject profile.

In a further embodiment of the system and method, wherein the data subject profile comprises a record, the method further comprising: aggregating information scores within the record; aggregating information score from related records from within a child table associated with the record; and aggregating information score from the child table.

In a further embodiment of the system and method, further comprising selecting a pre-defined number of data elements with the most information related to a given parent as defined by the information score.

In a further embodiment of the system and method, further comprising calculating an arithmetic average information (u) in all elements related to a given parent data subject profile.

In a further embodiment of the system and method, wherein calculating re-identification metric is defined a value associated with anonymity, equivalence class size, or re-identification risk.

In a further embodiment of the system and method, further comprising the evaluation of the ability to unambiguously link a record in one dataset to identify a matching individual or entity in another dataset.

In a further embodiment of the system and method, wherein anonymity value is a metric measured in bits, where if the anonymity value is greater than zero there are many individuals or entities who would match this record in the population, if the anonymity is equal to zero the individual is unique in the population, and if the anonymity value is less than zero the individual or entity is unlikely to exist in the dataset or population.

In a further embodiment of the system and method, further comprising generating a histogram from a plurality of calculated anonymity values to estimate a number of data subjects who are unique in the dataset.

Other aspects of the present invention comprise computing devices utilizing computer-readable media to implement methods arranged for deriving risk contribution models from a dataset. Rather than inspect the entire data model in order to identify all quasi-identifying fields, the computing device develops a list of commonly-occurring but difficult-to-detect quasi-identifying fields. For each such field, the computing device creates a distribution of values / information values from other sources. Then, when risk measurement is performed, random simulated values (or information values) are selected for these fields. Quasi-identifying values are then selected for each field with multiplicity equal to the associated randomly-selected count. These are incorporated into the overall risk measurement and utilized in the anonymization process. In typical implementations, the overall average of re-identification risk measurement results prove to be generally consistent with the results which are obtained on the fully-classified data model.

The implementation of simulated contributions can simplify classification, reduce manual effort, and increase the computing device's execution of the anonymization process of the dataset. This can, overall, save computing resources by reducing processor and memory usage during the anonymization process. Furthermore, additional resources can be focused on automation for de-identification, where the identifiers are transformed. Rather than a prescriptive approach, de-identification can be customized to maintain maximum data utility in the most desired fields.

## BRIEF DESCRIPTION OF THE DRAWINGS

Further features and advantages of the present disclosure will become apparent from the following detailed description, taken in combination with the appended drawings, in which:

Fig. 1 shows an example data subject profile that may be processed by the disclosed method and system;

Fig. 2 shows a flowchart for a method of estimating disclosure risk of a single individual or entity in a dataset;

Fig. 3 shows a representation of complex schema aggregation method;

Fig. 4 shows another representation of a complex schema aggregation method;

Fig. 5 illustrates quasi-identifier or confidential groups;

Fig. 6 illustrates measurement of information and probability on a simple subject profile;

Fig. 7 shows a graph of the relative error of a low risk data set;

Fig. 8 shows a graph of the relative error of a medium risk data set;

Fig. 9 shows a graph of the relative error of a high-risk data set;

Fig. 10 shows a system for determining disclosure risk;

Fig. 11 shows an illustrative process flow chart for deriving risk contribution models from data.

Fig. 12 shows an illustrative algorithm for simulating L2 contributions to risk measurement;

Figs. 13 and 15 show flowcharts of illustrative methods in which distribution identifiers and values are simulated for use in an anonymization or confidentialization process;

Fig. 14 is a chart showing an illustrative comparison of the true and simulated average risk measurement values considering patient height, weight, medical codes (e.g., MedDRA HLT) and concomitant medication codes (e.g., 4-digit ATC);

Fig. 16 shows an illustrative approach for leveraging simulated risk contributions of "core" quasi-identifiers and actual risk contributions of non-core quasi-identifiers to compute a single disclosure risk measurement; and

Fig. 17 shows an illustrative approach for combining simulated risk contributions and risk contributions from synthetic data to form a single risk measurement.

## DETAILED DESCRIPTION

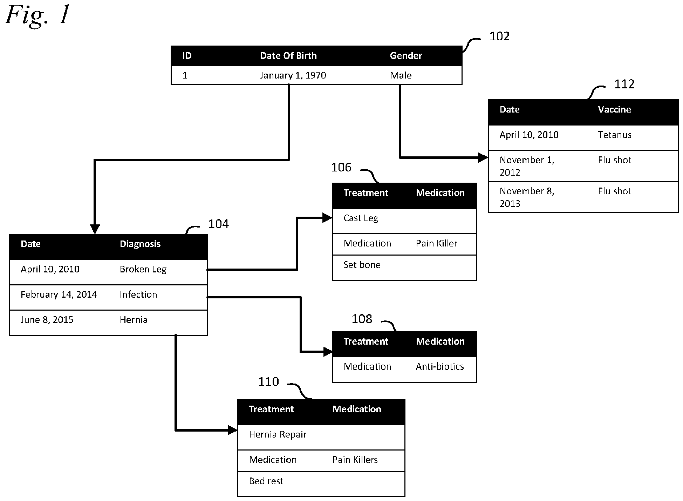

Embodiments are described below, by way of example only, with reference to Figs. 1-17.

An information theory-based replacement is provided for traditional risk measures, such as k-anonymity, or expected number of correct re-identifications, or re-identification risk. Methods based on k-anonymity compare records or data subjects within dataset to one another. If the dataset is a sample of an electronic database, then risk associated with the dataset is then extrapolated to a larger population contained in the electronic database. The disclosed computer system and computer implemented method directly estimates the risk of a record against a population and does not compare individuals against one-another but against a population, which allows this method to process a single record without a dataset being processed in order to provide a risk assessment. The system and method are effective at generating a risk measure because it can account unequal probabilities of matching records. For example, consider a probabilistic matching scheme which finds the most likely match, the mutual information can be used to measure and validate that a dataset is *l*-diverse. Entropy has been proposed for use in disclosure control of aggregate data, which predicts an attacker's ability to impute a missing value or values from views on the same data. Entropy can be used to estimate the average amount of information in QI and how the size of the population limits the amount of information that can be released about each subject.

The system and method disclosed take as input one or more subject profiles to determine risk of the dataset. The individual person is a subject or patient present in a dataset. The data of a subject profile is a description of the individual in structured form. The structure may be expressed in a database, extensible mark-up language (XML), JavaScript Object Notation (JSON), or another structured format. The subject profile consists of fields and associated values that describe the subject. For example, a subject profile may contain date of birth, province or state of residence, gender. Furthermore, a subject profile may contain "longitudinal data" (or temporal data) which either changes in time or describes an event at a particular time. Examples of longitudinal data might be information about a hospital visit (admission data, length of stay, diagnosis), financial transactions (vendor, price, date, time, store location), or an address history (address, start date, end date). It is noted that the term "individual" as used herein may include and/or be applicable one or more entities in some cases as will be evident by the accompanying description and context of a given use.

An example data subject profile is shown in Fig. 1. Element 102 contains the top-level subject information such as demographic information. Element 104 contains longitudinal data describing various doctors' visits. There are many doctors' visits related to a single subject. For each doctors' visit, there are child elements 106, 108, 110, which describe the treatment from each visit. Notice again there may be many treatments for a single visit. In a database, elements 106, 108, and 110 would normally be in a single table. Connected to the subject demographics there are also a number of vaccination events listed 112.

A data subject profile may in fact be data extracted from a text file and assigned to certain meaningful fields. If a dataset is being processed that contains multiple individuals, they are not required to have the same field. By not requiring the same fields to be present enables processing of unstructured, semi-structured and textual dataset, where individuals may not have the same schema.

Often when data is stored in a database, XML, or JSON format there is a schema which defines, which fields exists, what they contain, and any relationships between fields, elements, records, or tables. The relationships are usually of the form 1-to-1 or 1-to-many. For example, consider the relationship between a subject and DOB, Gender(1-to-1), or subject and some financial transactions (1-to-many). There are scenarios where many-to-many and many-to-one relations exist and these should not be excluded, however the disclosed examples provided will focus on the more common relationships within a subject profile.

In disclosure control and risk measurement each field in a schema is classified into direct-identifiers (DI), quasi-identifiers (aka indirect identifiers) (QI), and non-identifiers (NI). For ease of presentation, QIs may be assumed to incorporate any relevant confidential attributes needed to estimate disclosure risk. The system can generically apply to any value regardless of classification, however QIs (or QI fields) will be referred to as this is normally utilized in risk measurement.

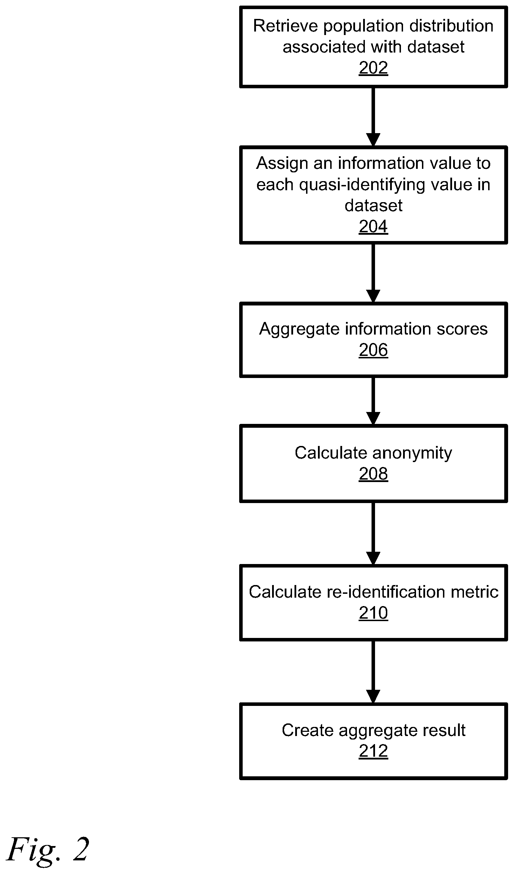

Referring to Fig. 2, a population distribution for each QI in the schema is retrieved (202) from a storage device. A population distribution may be associated with one or more QIs and multiple distributions may be required for the schema. The population distribution is associated by the type of data contained in the dataset. For example, the population distribution may be from census data which can be determined based upon the QI in the schema. The association of the dataset with population distributions may be determined automatically by analyzing content of the dataset or by predefined associations. A population distribution maps a value to probability, which represents the probability of someone in the population having this value.

Once a distribution for each QI is acquired, each value in a data subject profile is assigned an information or disclosure score (204). For example, information scores are measured in bits and based on information theory. For example the sex of the subject may be expressed as 1-bit of data, male or female, whereas an alphanumeric postal code having 3 numbers and 3 letters would be 24 bits, where A-Z is 4.7 bits = $\log_2(26)$, 0-9 is 3.3 bits = $\log_2(10)$ and the postal code could be 4.7 + 3.3 + 4.7 + 3.3 + 4.7 + 3.3 = 24 bits. However not all of those postal codes are in use, so if the number of postal codes in use is 845,990 the number of bits where information in postal code is $\log_2(845,990)$ = 19.7 bits. Further the specific population per postal code could reduce the number of bits, for example a specific postal code K1G4J4 has a population of 4,076, where Canada has a population of 35 million, so the information in K1G4J4 is $\log_2(4076/35 \text{ million})$ = 13 bits. Although a postal code calculation of information bits is described the method of determining the number of information bits is applicable to other QIs in a similar manner.

Aggregation of information scores is performed to create a single information score from several values (206).

There are several different aggregation techniques, each serves to model certain types of relationships. Aggregation techniques can be composed where one aggregation technique uses the results of other aggregation techniques. Regardless the complexity of a schema, the end result is a single information score that is measured in bits, which describes the accumulated or total information available for re-identification of the data subject. The resulting single value is referred to as the *given_bits*.

Anonymity can then be calculated using *given_bits* and the population size as input (208). The equation for anonymity (*a*) is *a* = *reid_bits - given_bits,* where *reid_bits* is the number of re-identification bits, is calculated from size of the population using the following equation *reid_bits = log$_2$(population)*. The population is the group of subjects from which the subject profile (or dataset) is sampled. For example, if a dataset contains a random sample of voters then the population is the total number of voters.

Most measures use equivalence class size (*k*), which cannot be less than 1; at minimum an individual person is considered unique. Anonymity can measure beyond uniqueness (negative anonymity or zero anonymity is unique). Negative anonymity suggests a person is unique usually even on a subset of their subject profile. The magnitude of negative anonymity indicates how much suppression or generalization by de-identification techniques will be required to have the person look like another person in the population. Anonymity can be used to establish the probability that someone else would look like this person. Negative anonymity can be used to determine if there is sufficient information to link records across dataset with a significant confidence level.

There are several technical privacy and confidentiality-risk metrics that can be used to calculate from anonymity. Anonymity can be converted to equivalence or similarity class size and re-identification risk. All of these metrics are established standards. A result of the process defined here is that the risk is measured on an individual, not on a dataset. Other methodologies focus on measuring re-identification metrics on datasets but cannot necessarily assign a risk to a data subject in a dataset or an individual data subject (i.e. dataset of 1 data subject). This enables processing subject profiles individually, leading to linear time processing, instead of other k-anonymity methods, which are usually quadratic or worse processing times. Furthermore, this enables measuring re-identification metric of profiles coming from text documents, which are not contained in a dataset or having a common schema.

For all the following examples, let *a* be the anonymity of the given subject where Equivalence (or similarity) class size (k) is calculated as $k = 2^{max(a,0)}$. The re-identification risk using the following formula *reid_risk* $= 2^{-max(a,0)}$ is calculated (210). The re-identification risk may be presented for the associated record. Alternatively, the resulting calculated re-identification metric (210) can be aggregated (212) into a whole for the dataset to create an aggregate result. The aggregation method utilized depends on the re-identification metric and the data model being considered and will be discussed below.

Re-identification Risk can be one of a maximum risk or an average risk of someone randomly choosing a record from the dataset and trying to re-identify it in the population. In the case of average risk, it may be calculated as

$$average\_reid\_risk = \frac{1}{n}\sum_{i=1}^{n} reid\_risk_i$$ where is *n* the total number of data subjects in the sample, *i* iterates over each data subject, and *reid_risk$_i$* is the risk of re-identification for subject (*i*).

Re-identification Risk can be an average risk of someone randomly choosing a subject in the population and trying to re-identify their record in the dataset. This average is the number of equivalence classes divided by the population size. The equation is

$$average\_reid\_risk = \frac{\sum_{i=1}^{n}\frac{1}{k_i}}{\sum_{i=1}^{n}\frac{K_i}{k_i}}$$

where is *n* the total number of data subjects in the sample, *i* iterates over each data subject, *K$_i$* and *k$_i$* are the number of records matching a subject in the sample, wherein calculating the risk of re-identification may be replaced with calculating the number of data subjects matching this record (*k*) using the following equation $k = 2^{max(a,0)}$ (*k* value) and using sample instead of population measurement, respectively.

Further the anonymity may be aggregated into histogram. Since anonymity is normally a real value (i.e. continuous or decimal) if anonymity values are converted into an integer value, the anonymity profile of dataset can be concisely expressed. In part, this is because anonymity is in a logarithmic scale, expressing magnitudes of difference. However, operations like round, round-up (ceil), round-down (floor), will change the average risk profile of the histogram. A first histogram models population anonymity and maintains the average risk profile of the sample to population re-identification. Let *H[...]* be the histogram. *H[a] = x* where *a* is an integer anonymity value and *x* is non-negative real value indicating the number of people with this anonymity.

For each subject let the anonymity of the subject contributed to the histogram be

$$z = floor(a)$$

$$d = a - z$$

$$p = 2^{1-d} - 1$$

$$H[z] = H[z] + p$$

$$H[z+1] = H[z+1] + (1-p)$$

This histogram is an effective tool for estimating the number of data subjects with a particular anonymity. A common use for this would be to estimate the number of data subjects who are unique. The number of unique data subjects is

$$= \sum_{i=l}^{i<=0} H[i]$$ where $l$ is the lowest anonymity value in the histogram.

The second histogram models sample and population anonymity and maintain the average risk profile of the population to sample re-identification. A two-dimensional histogram describes the population and sample anonymity as a matrix of values, the row and column number represent integer anonymity values for the population and sample, while the cells contain real values indicating the number of people with this (population, sample) anonymity.

Let $A_i$ be the population anonymity of data subject $i$
Let $a_i$ be the sample anonymity of data subject $i$
Let $H[x][y] = z$ be a cell in the histogram.
$x$ is the population anonymity as an integer value
$y$ is the sample anonymity as an integer value
$z$ is a non-negative real value indicating the number of people with anonymity $x, y$
$\forall i \in individuals$

$$z_{pop} = floor(A_i)$$

$$z_{samp} = floor(a_i)$$

$$d_{pop} = A_i - z_{pop}$$

$$d_{samp} = a_i - z_{samp}$$

$$p_{samp} = 2^{1-d_{pop}} - 1$$

$$p_{pop} = \frac{-2 * (2^{d_{pop}-d_{samp}} - p_{samp} - 1)}{1 + p_{samp}}$$

$$H[z_{pop}][z_{samp}]+ = p_{pop} * p_{samp}$$

$$H[z_{pop}][z_{samp}+1]+ = p_{pop} *(1 - p_{samp})$$

$$H[z_{pop}+1][z_{samp}]+ = (1 - p_{pop}) * p_{samp}$$

$$H[z_{pop}+1][z_{samp}+1]+ = (1 - p_{pop}) *(1 - p_{samp})$$

A population distribution defines a mapping of quasi-identifying values to the probabilities of those values occurring in the range, region, or demographic profile covering the data subjects associated with/contained within the dataset. The algorithm is agnostic of the source of the priors, however a number of methods are defined to obtain priors including Estimated Sample Distribution (ESD) measurement.

A population distribution may be derived from census data or other pre-existing data sources. The probability

$$pr(v) = \frac{populationHaving(v)}{population}$$

of value (*pr(v)*) is defined as

A population distribution may be approximated using the distribution from the dataset. The method for estimating population distributions using sample data is provided by determining the sample distribution, this is a map of values to the number of people with this value. Each value is classified as common or rare. Common values occur when more than $X$ individuals have that value in the sample distribution. Rare values occur when a value is associated with $X$ or less data subjects in the sample distribution where $X$ is normally set to 1. Thus, to the total number of values is the sum of the rare values and common values.

$$TotalValues = RareValues_{sample} + CommonValues.$$

The total number of values (*EstimatedValues*) is estimated including unseen values, that is values that did not occur in the data (sample) but occur in the population. Estimation of the total number of values can use, but is not limited to species estimators, such as Bias Chao estimator or Abundance Coverage-based Estimator (ACE). These estimators are dependent on the distribution selected.

Alternatively, a distribution may be compared against a standard distribution, such as a uniform distribution or normal distribution. If they match in shape within a certain tolerance (error), then information about the sample distribution can be used to estimate the number of values that have not been seen. Assuming all unseen values are in fact rare values the number of rare values in the population is calculated where

$$RareValues_{pop} = EstimatesValues - CommonValues.$$

The resulting population distribution for a common value is the probability of value occurring in the sample distribution. Consider common values are well-represented and the sample distribution should be a good estimate of the population, so $pr_{pop}(v_{common}) = pr_{sample}(v)$, where $pr_{sample}(v)$ is the sample probability and $pr_{pop}(v)$ is the population probability.

For the resulting population distribution for rare values, find the frequency of the value of the sample distribution and correct this for the probability that this value was randomly selected to be included in the dataset. The intuition is that the rare values that are in the data made it by chance and need to be accounted for the chance of rare value having made it in to the dataset.

$$pr_{pop}(v_{rare}) = pr_{sample}(v_{rare}) * \frac{rareValues_{sample}}{rareValues_{pop}}$$

A population distribution may be approximated using a uniform distribution. Given the size of the value space (how many values are possible), then assume the probability of any given value is *1 / NumberOfValues.* On average this leads to an overestimate of the risk of re-identification (a conservative assumption), however on any individual case it can underestimate or overestimate the probability of a value and lead to under or overestimation of risk.

A distribution may be based on known or published averages. This average may be returned as the probability for a value occurring, which satisfy the value specificity. For example, a publication may claim that "80% of Canadians see a doctor at least once a year". The probability would be 80% and the specificity is 1 year. The population distribution can return that the year (date without month or day) of a doctor's visit has an 80% probability (i.e. 80% of the population visited a doctor that year).

A distribution based on known or published averages may be made more granular (more specific) by combining a known average and uniform distribution over the specificity. As with the previous example, 80% is the probability and 1 year is the specificity, however the values are in days. The probability can be estimated of a particular subject visiting a doctor on a particular day as (assuming 365 days in a year) *80% ÷ 365 = 0.8 ÷ 365=0.2%.*

A joint distribution may be used to more accurately model probabilities and correlations between values. The probability of set/combination of quasi-identifier values occurring can be expressed as the joint distribution over two or more quasi-identifying values. A joint quasi-identifier may be defined as a tuple of values, for example a zip code and date of birth (90210, April 1, 1965). A joint distribution of the quasi-identifiers can be used to calculate the probability of this combination of values occurring. A joint distribution may be acquired by any methods for acquiring a population distribution.

A method for assigning an information score (measured in bits) is to calculate $I(v) = -log_2(pr(v))$ where v is the value, $I(v)$ is the information score for the value, and $pr(v)$ is the probability of the value occurring in the population distribution.

A method for assigning an information score (measured in bits) can incorporate the expected (probable or likely) knowledge of an average adversary. The method assumes a probability of knowing a particular value is given. Let $0 \leq k(v) \leq 1$ be the probability that someone would know value v. For example, if v is a birth event, it is likely to be known or in the public domain ($k(v) = 1$), while a sinus infection is not particularly knowable or memorable ($k(v) < 1$). The expected information from value $I(v)$ can be calculated as

$$I(v) = -\log_2(pr(v)) * k(v)$$

Assigning an information score (measured in bits) can incorporate the probability of knowing a value and compute the weighted average risk of all combinations of knowledge scenarios. For a set of values ($V = \{v_1, v_2, ..., v_{n-1}, v_n\}$), a knowledge scenario (KS) is the set of values known by an adversary ($KS \subseteq V$). The set of all knowledge scenarios is the power set of $V$ $^V$ (i.e. $\mathbb{P}(V)$ ). Let the probability of a particular value being known be $k(v_i)$. Let the risk associated with a knowledge scenario be *risk(KS)*. The weight average of all knowledge scenarios is

$$average = \sum_{\forall s \in P(V)} \left( R(s) \left( \prod_{v \in s} k(v) \right) \left( \prod_{v \in V \wedge v \notin s} (1 - k(v)) \right) \right).$$

Because the power set is combinatorial, then the previous equation is combinatorial in computation, however, the equation can be factored into terms leading linear processing if the following equation is used for the information in each value

$$I(v) = \log_2 \left( k(v) * pr(v) + (1 - k(v)) \right).$$

Consider the following example where $V = \{v_1, v_2\}$ then

$$average = k(v1)k(v2)R(v1, v2) + k(v1)(1 - k(v2))R(v1) +$$
$$(1 - k(v1))k(v2)R(v2) + (1 - k(v1))(1 - k(v2))R()$$

If $R(v1, v2) = 2^{I(v1)I(v2) - reid\_bits}$ then the equation becomes

$$average = k(v1)k(v2)2^{I(v1)I(v2)-reid\_bits} + k(v1)(1-k(v2))2^{I(v1)-reid\_bits} +$$
$$(1-k(v1))k(v2)2^{I(v2)-reid\_bits} + (1-k(v1))(1-k(v2))2^{-reid\_bits}$$

$$average = 2^{-reid\_bits}\left(k(v1)2^{I(v1)}+1-k(v1)\right)\left(k(v2)2^{I(v2)}+1-k(v2)\right)$$

This result is computationally significant, simplifying combinatorial processing to linear.

Values can be aggregated into a single information score for a data subject. This score is referred to as the *given_bits* for the data subject. A number of methods are described below, however this list is neither complete nor limiting. New aggregations scheme can be introduced to the methodology.

Aggregation of Total Knowledge is a method where information scores for values are summed together resulting in the total information. Assume there are *n* values indexed from *1...n.* Then the total information score (*given_bits*) is

$$given\_bits = \sum_{i=1}^{n} I(v_i)$$

Simple Mutual Information is a method where information scores are aggregated yet account for correlations. In information theory correlation is expressed as mutual information. The relationship between two values is expressed in pointwise mutual information. If the values are correlated, that is they tend to co-occur, then the total information from the two value is less than the sum of the two independent values. This occurs because one value may be inferred from another value, thus knowing the second value does not increase information.

Assuming there are n values indexed from *1...n* this method requires joint distributions as previously described. Assuming that joint distributions are provided for all pairwise combinations of values from *1..m* where *m < n* a set *PV* of all pairs of values $(v_i, v_j)$ where $i \in \{1..m\}, j \in \{1..m\}$, $i \neq j$ is constructed. For each pair $(v_i, v_j) \in PV$ the pointwise mutual information

$$(PMI)PMI(v_i, v_j) = -log_2\left(\frac{pr(v_i, v_j)}{pr(v_i)pr(v_j)}\right)$$

where $pr(v_i, v_j)$ is the value from the joint distribution that is calculated. A subset of pairs (SPV) from PV where $SPV \subseteq PV$ is calculated. The *given_bits* for values *l...n* is calculated. This may be done via the method of Aggregation of Total Knowledge but is not limited to this. For each pair $(v_i, v_j) \in SPV$ the pointwise mutual information is added to given_bits where

$$given\_bits' = given\_bits + \sum_{(v_i, v_j) \in SPV} PMI(v_i, v_j).$$

and *given_bits'* is then aggregated to an information score accounting for mutual information.

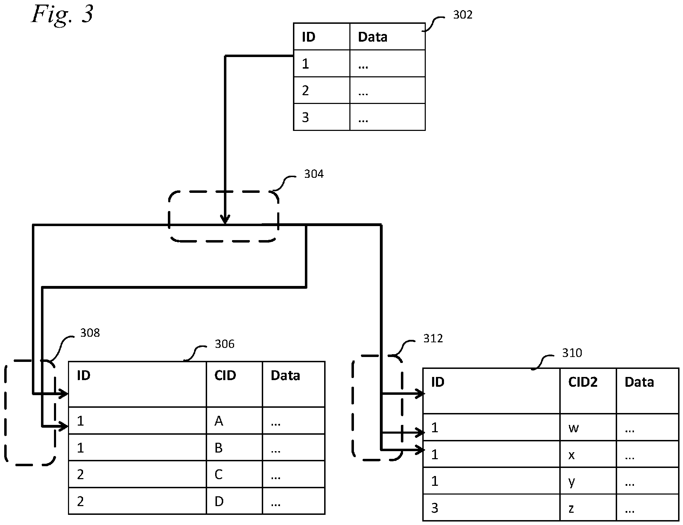

A general and extensible method for aggregating information score in complex schema consisting of multiple table (or table like elements) is described. A dataset may be expressed as a schema, which has tables and relations between tables. For practical purposes the model is described as if it was in a database forming a directed acyclic graph. For the purposes of this method and risk measurement, the top or root table 302 would be the subject table, since all measurements are based on subjects as shown in Fig. 3. A complex schema usually has a top-level table 302 containing key data for each data subject. Each record in this table 302 refers to a different data subject. The top-level table 302 is a parent table, child tables can also be parents based on perspective. Child tables 306 and 310 link to parent tables 302 on one or multiple keys. For each record in a parent table 302 there may be zero or more records in the child table 306 and 310. Information from related records, or example within a child table 306 and 310 about the same parent record are aggregated into tables 308 and table 312. Information from child tables are aggregated into table 304. The aggregation process can be repeated for recursive data structures. Traversal method such as for example infix traversal may be utilized.

Aggregation of information within a record is often accomplished using aggregation of total knowledge or simple mutual information. Related record aggregation is applied to the information score from records within a single child table that are related to the same parent record (from the parent table). The following schemes may be used:

Total Information - The information in each record is summed to obtain the total information contained in all child records for the given parent. This is effectively aggregation of total information.

Maximum Adversary Power *X* - Select the *X* records with the most information in them related to the given parent as defined by the information score. Total (sum) the information in X records.

Average Adversary Power *X* - Calculate the arithmetic average information (*u*) in all elements related to the given parent. The information for the data element is = *X*\**u* Table Aggregation is applied to information scores from child tables (result of related records aggregation) relating to a single parent record. A parent record may have multiple child records in multiple child tables. The purpose of aggregation is to determine how much of this information from these child tables is aggregated up to the parent record. This resulting information is added to the information of the parent record.

Total Information - The information from each child table for this parent record is summed and added to the information of the parent record.

Maximum Table - Add the information from the child table, which has the high information contribution, to the parent record.

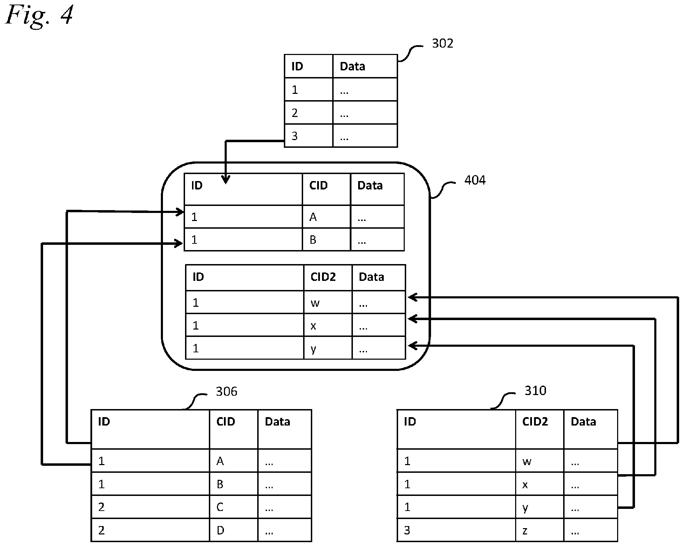

Fig. 4 shows another representation of a complex schema aggregation method. The previous complex schema aggregation is particularly easy to implement and quite efficient on databases. A variation of the previous complex schema aggregation allows better modelling of the risks associated with multiple tables. This is important when the event for adversary power may be spread across different tables, however this method is best implemented using subject profiles that are single data structure (not spread across different tables). In this method all related records from child tables 306 and 310 together are collected together into an aggregate table 404. The difference is related records are not combined from a single table into an information score, instead all records are pushed or included into a single collection of records (from child tables) and all child records identify what table they are from.

Aggregating all information from child records can be fulfilled by any methods described for related record aggregation, such as total power, average adversary power *X,* and maximum adversary power *X*. Note that now the adversary power aggregation would be over all child claims instead of limited to a single table.

The Back Fill Adversary Power is a variant of Average Adversary Power *X*; under many circumstances it behaves as average adversary power *X* and maximum Table would have behaved under the first aggregation scheme, however in case were the information is spread across different tables and adversary power *X* cannot be fulfilled by a single table, then it includes *X* events. For a given parent record (p) average adversary power *X* is calculated for each table. Recall that this method calculates a *u*, which is the average information in a QI. This algorithm will refer to $u_t$ as the information in an average data element for table *t.* The data element and information values are initially set to 0. While data element < *X* the highest contributing table *(T)* is selected that has not been processed yet and *Y* is the number of records in *T* that are about to be processed then *information = min(X- data_elements, Y)*\*$u_t$ and *data_elements = data elements + min (X- data_elements, Y)* where the table T is marked as processed. Information about the amount of information aggregated from child tables is then processed.

Measuring mutual information requires joint distributions, which may not always be accessible to users of the method. A QI groups mechanism can be used to approximate known correlation by only including one of the correlated variables in the risk measurement. A group of QI is defined as a set of tuples table and column and effectively replaces these QIs (table and column) with a single pseudo QI. The pseudo QI must also have a place in the data structure (particular table that it will be placed into). The information score of the pseudo QI may be defined by many procedures. One procedure is that the information score of the pseudo QI is the maximum of information score of any QI contains within it (in the tuple of table and columns).

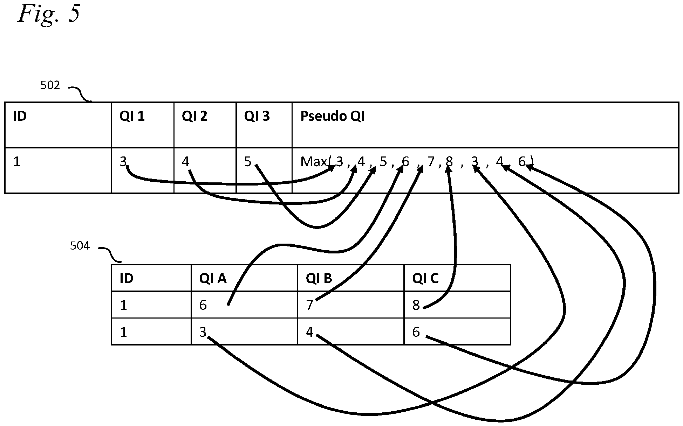

Fig. 5 illustrates QI groups. A single pseudo QI is created from Table 502 (QI 1, QI 2, and QI 3) and Table 504 (QI A, QI B and QI C). The resulting pseudo QI is the maximum of all of the information values. Creation of QI groups happens after assigning information scores to each value but before aggregating information scores. There are many uses of QI groups, one common structure in medical database will store the diagnosis encoding in multiple columns, depending on the encoding scheme (e.g. International Statistical Classification of Diseases (ICD)-9, ICD-10, multilingual European Registration Agency (MEDRA)). For any single record one or more of the columns may have values, however there is usually never a single completely populated column. Measuring the risk on a single sparse column would underestimate the risk. Measuring the risk on all columns would over-estimate the risk (including the same diagnosis multiple times if two encodings are present). Instead with a QI group the most information diagnosis will be used and the other encodes should be subsumed by this.

Alternatively, probabilities may be utilized instead of information scores. First recall that information scores are $I(v) = -log_2(pr(v))$, so an information score can be represented as a probability using $2^{-I(v)} = pr(v)$.

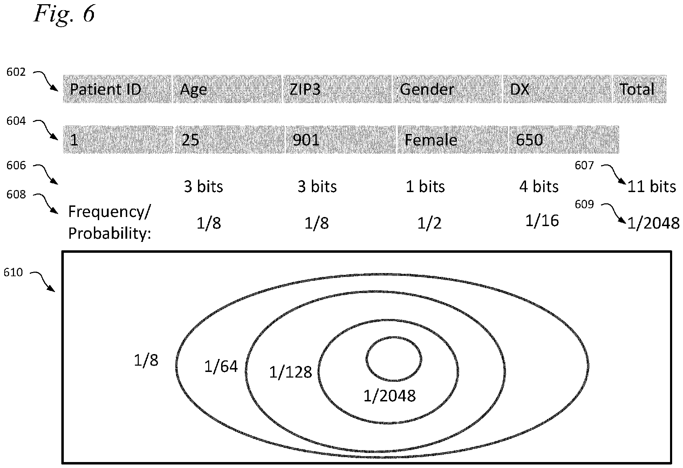

Fig. 6 shows the parallel of using probability and information theory to estimate the risk of re-identification. The schema 602 identified the QIs that are present in a record. In this example patient ID, age, Zip code, gender, and diagnosis. For the subject profile the data 604 provides the information associated with the subject record. Information scores 606 are assigned to each QI and then aggregate them into a total 607 which in this example is 11 bits. Probabilities 608 are assigned for each score and are aggregated into a product 609, which in this exampled is 1/2048. Graphic 610 illustrates how the inclusion of each QI narrows the possible number of population matches. When using probabilities, a probability is assigned to each value, it is assumed that the distributions already return probabilities. The probabilities can then be aggregated where an addition on a logarithmic scale is the same as multiplication on a linear scale. It is a known mathematical identity

$$I(a) + I(b) = -\log_2(pr(a) * pr(b))$$

$$2^{-(I(a)+I(b))} = pr(a) * pr(b)$$

the result is

$$probability\_existance = 2^{-given\_bits}$$

An expected number of matching people in the population is calculated by:

$$expected\_matches = \frac{population}{probability\_existance}$$

The re-identification risk is then calculated by

$$a = -\log_2(expected\_matches)$$

$$k = \max(1, expected\_matches)$$

$$reid\_risk = \min(1, \frac{1}{expected\_matches})$$

Aggregation is then performed as previously described as the same re-identification metrics are provided.

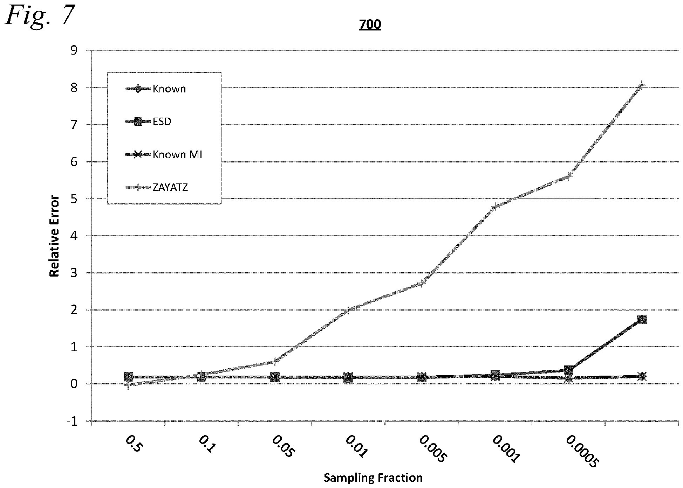

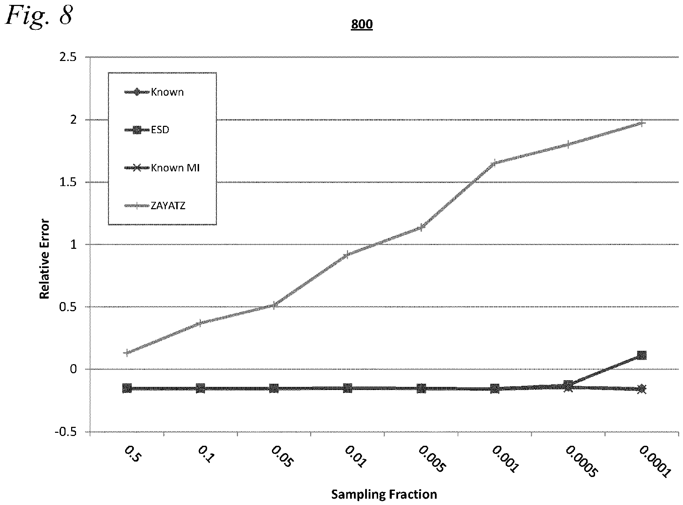

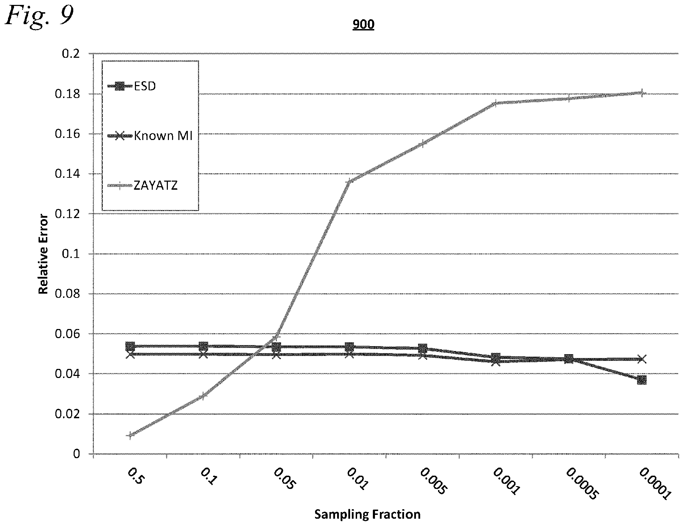

Figs. 7 to 9 show the relative error of some methods when compared against the actual population risk and varying the sampling fraction. Fig. 7 shows a graph 700 of a low risk dataset plotted results are estimate sample distribution (ESD), simple mutual information (MI known), using known population distributions (known), and the Zayatz-Korte method (currently one of the most accurate estimation techniques). Fig. 8 show a graph 800 of a medium risk data and Fig. 9 show a graph 900 of a high-risk data set. As shown the Zayatz-Korte method often has much higher relative error than the ESD. Further the Zayatz-Korte method shows an increase in risk as sampling fraction decreases. In contrast the ESD method provides consistent results almost without regard for sampling fraction. The ESD method provides conservative estimates on the high-risk data shown in Fig. 9 when compared to the baseline.

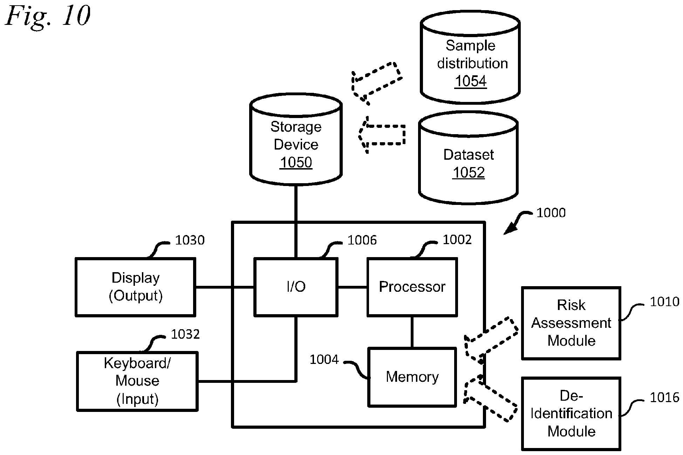

Fig. 10 shows a system for performing risk assessment of a dataset. The system 1000 is executed on a computer comprising a processor 1002, memory 1004, and input/output interface 1006. The memory 1004 executes instruction for providing a risk assessment module 1010 which performs an assessment of re-identification risk. The risk assessment may also include a de-identification module 1016 for performing further de-identification of the database or dataset based upon the assessed risk. A storage device 1050, either connected directly to the system 1000 or accessed through a network (not shown) which stores the dataset 1052 and possibly the sample population distribution 1054 (from which the dataset is derived). A display device 1030 allows the user to access data and execute the risk assessment process. Input devices such as keyboard and/or mouse provide user input to the I/O module 1006. The user input enables selection of desired parameters utilized in performing risk assessment but may also be selected remotely through a web-based interface. The instructions for performing the risk assessment may be provided on a computer readable memory. The computer readable memory may be external or internal to the system 1000 and provided by any type of memory such as read-only memory (ROM) or random-access memory (RAM). The databases may be provided by a storage device such compact disc (CD), digital versatile disc (DVD), non-volatile storage such as a hard drive, USB flash memory or external networked storage. In typical implementations, the memory may be non-transitory and does not include waves, signals, and/or other transitory and/or intangible communication media. One or more components of the system or functions of the system may be performed, accessed, or retrieved remotely through a network.

Each element in the embodiments of the present disclosure may be implemented as hardware, software/program, or any combination thereof. Software codes, either in its entirety or a part thereof, may be stored in a computer readable medium or memory (e.g., as a ROM, for example a non-volatile memory such as flash memory, CD ROM, DVD ROM, Blu-ray™, a semiconductor ROM, USB, or a magnetic recording medium, for example a hard disk). The program may be in the form of source code, object code, a code intermediate source and object code such as partially compiled form, or in any other form.

It would be appreciated by one of ordinary skill in the art that the system and components shown in Figs. 1-17 may include components not shown in the drawings. For simplicity and clarity of the illustration, elements in the drawings are not necessarily to scale, are only schematic and are non-limiting of the elements' structures. It will be apparent to persons skilled in the art that a number of variations and modifications can be made without departing from the scope of the invention as defined in the claims.

The present disclosure provided, for the purposes of explanation, numerous specific embodiments, implementations, examples, and details in order to provide a thorough understanding of the invention. It is apparent, however, that the embodiments may be practiced without all of the specific details or with an equivalent arrangement. In other instances, some well-known structures and devices are shown in block diagram form, or omitted, in order to avoid unnecessarily obscuring the embodiments of the invention. The disclosure should in no way be limited to the illustrative implementations, drawings, and techniques illustrated, including the exemplary designs and implementations illustrated and described herein, but may be modified within the scope of the appended claims.

While several embodiments have been provided in the present disclosure, it should be understood that the disclosed systems and components might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

Further aspects of the present invention include techniques that may be utilized to anonymize data obtained, for example, from clinical trials before that data can be utilized to develop new drugs, medical devices, and the like. In one exemplary process of anonymizing data, a population distribution for each quasi-identifier (QI) in a schema is retrieved by a computing device from a storage device. A population distribution may be associated with one or more QIs and multiple distributions may be required for the schema. The population distribution is associated by the type of data contained in the dataset. For example, the population distribution may be from census data which can be determined based upon the QI in the schema. The association of the dataset with population distributions may be determined automatically by analyzing content of the dataset or by a predefined association. A population distribution maps a value to probability, which represents the probability of someone in the population having this value.

A population distribution defines a mapping of quasi-identifying values to the probabilities of those values occurring in the range, region, or demographic profile covering the data subjects associated with/contained within the dataset. The dataset is agnostic of the source of the population distribution; however, a number of methods are defined to obtain population distributions, including Estimated Sample Distribution (ESD) measurement. A population distribution may be derived from census data or other pre-existing data sources. A population distribution may be approximated using the distribution from the dataset. A distribution may be based on un-structured data as well, for example using natural language processing or other suitable functionalities. The distributions from un-structured data can be combined with other distributions for a given QI. A distribution may be based on known or published averages. A distribution based on known or published averages may be made more granular (more specific) by combining a known average and uniform distribution over the specificity.

In the process described above, sorting through and classifying the data to begin the anonymization process can be burdensome due to the large number of columns and variables typically available in datasets. In fact, the process of classifying, connecting, and transforming quasi-identifiers (QIs) is one of the most time-consuming and complex elements of the measurement and mitigation of disclosure risk. Some datasets have few quasi-identifying fields about many subjects; other datasets have many quasi-identifying fields about relatively few subjects. In at least the latter case, it is intractable to identify and classify every field.

For example, in the case of structured clinical data, there are on average $\mathcal{O}(1800)$ quasi-identifiers which are identified and considered for transformation in risk mitigation. These QIs can be cross sectional or longitudinal in nature. Level 1 (L1) QIs are cross sectional in nature, such that they are found once for each individual or subject in the data set. Level 2 (L2) QIs are longitudinal in nature, such that more than one instance may be recorded for each individual or subject in the data set. These quantities tend to vary over time and can include clinically-relevant data such as dates, medical events, and medications taken.

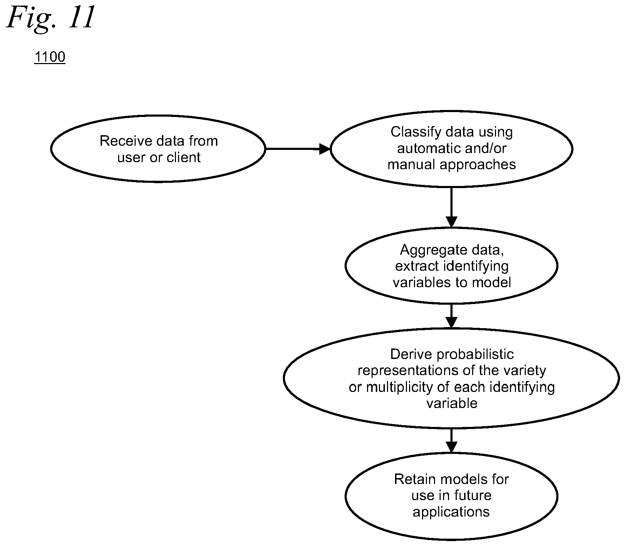

The high-level process flow for deriving risk contribution models for identifying variables is shown in the diagram 1100 in Fig. 11. The identification of quasi-identifiers in the data can be achieved either manually or automatically, with the latter being achievable using a deterministic algorithm, a set of pre-defined rules, or an algorithm that leverages probabilistic decision-making, for example through machine learning or artificial intelligence.

Rather than inspect the entire data model in order to identify all quasi-identifying fields, the computing device develops a list of commonly-occurring but difficult-to-detect quasi-identifying fields. For each such field, the computing device creates a distribution of values / information values from other sources. Then, when risk measurement is performed, random simulated values (or information values) are selected for these fields. Quasi-identifying values are then selected for each field with multiplicity equal to the associated randomly-selected count. These values are incorporated into the overall risk measurement and utilized in the anonymization process. In typical implementations, the overall average of disclosure risk measurement results prove to be generally consistent with the results which are obtained on the fully-classified data model.

As mentioned above, the computing device may also automatically identify quasi-identifying fields within the dataset, using a deterministic algorithm, a set of pre-defined rules, or an algorithm that leverages probabilistic decision-making, for example through machine learning or artificial intelligence. The combination of automatic identification of quasi-identifying fields with simulated values may be used in conjunction with, or in lieu of, real data by the computing device to avoid complex risk measurements, or to speed up processing of large/complex datasets. Possible additional uses of automatic identification of quasi-identifying fields with simulated values by the computing device include, but are not limited to, the detection and inclusion in risk measurement of personal information within streaming data, or the performance of on-device processing of data, such as disclosure risk measurement or anonymization. Simulated values and distributions derived as part of the process explained above can also help feed into a natural language processing algorithm or other algorithms to detect identifying and other information in un-structured data as well.

The usage of simulated contributions can simplify classification, reduce manual effort, and increase the computing device's execution of the anonymization process of the dataset. This can, overall, save computing resources by reducing processor and memory usage during the anonymization process. Furthermore, additional resources can be focused on automation for de-identification, where the identifiers are transformed. Rather than a prescriptive approach, de-identification can be customized to maintain maximum data utility in the most desired fields.

A computing device, such as a remote service or a local computing device operating an application, is configured to generate value distributions and then select quasi-identifying fields in order to streamline a data anonymization process which utilizes the classified data in subsequent processing (e.g., performing de-identification, risk assessment, etc.). Specifically, two distinct steps are performed to streamline data classification. The first is an up-front one-time (or infrequently recurring) step of generating value distributions. The second either precedes or embellishes the first step of previous submission on a per-measurement basis.

For any quasi-identifying field which is to be simulated, a population distribution must be created. These distributions can be obtained from a variety of sources, including, but not limited to a single large dataset, an aggregation of small dataset, census or other data sources, research papers, unstructured data etc. A population distribution may also be derived from other distributions, including but not limited to joint distributions. The distribution may be comprised of the distribution of actual values, the distribution of the raw information values of the actual values, or the distribution of knowable information values of the actual values.

A second distribution reflects the number of longitudinal quasi-identifying values held by individuals in the population. (Longitudinal quasi-identifying values are those which a person has an unknown number of, such as medical diagnoses, as opposed to those which always have a cardinality of one, such as date of birth). As with the values, the counts may be sourced from a single dataset, an aggregation of multiple datasets, or other external sources. The raw population distributions may be processed in various manners, such as by smoothing algorithms. A single set of distributions may be created for multiple risk measurement projects or created in a bespoke manner for each individual risk measurement project.

A computing device can be configured to store the source(s) of the two types of distributions as a whole, or the source(s) of actual values, frequency of values, the information values of the actual values, or the number of longitudinal quasi-identifying values held by individuals in the population.

These distributions may also be compared or validated against historical/prior information by the computing device, such that any new data/evidence obtained can be used by the computing device to generate or update a posterior risk estimate. Such an extension can be used in applications including, but not limited to, Bayesian risk estimation, and anonymization of streaming data.

When a dataset is received for a risk measurement assessment, for each data subject the computing device randomly selects a random value for each demographic quasi-identifying value from the associated population distribution. A random count of longitudinal values from the distribution of counts for that data subject (either a single count for that data subject which is shared across all longitudinal quasi-identifying values, or a separate count for each longitudinal quasi-identifying field). Quasi-identifying values are then selected for each field with multiplicity equal to the associated randomly-selected count. Once the identifying variables are sufficiently identified in the dataset, the computing device then proceeds with the remainder of the process and retrieves the appropriate population distributions for the randomly-generated quasi-identifying fields. Other (true) quasi-identifying fields use their own population distributions as applicable.

Cross sectional (or L1) QIs are those that are found once for each individual or subject in the data set. For example, subject height and weight at intake tend to be included in risk measurement and appear as a measured value in many clinical trials. Accordingly, certain assumptions can be made about the height and weight distributions that enables modeling on a per-participant basis. For example, height and weight measurements tend to follow unimodal distributions centered about global averages and given an assumption of independence in the present risk measurement methodology, correlations between height and weight can be safely ignored if generated randomly for each participant. And while the simulated heights and weights for individual subjects may vary meaningfully from their true values, taken in aggregate, their contribution to average risk may closely mirror that of the real data.

Given these assumptions, histograms can be built using the desired L1 quantities for each participant by aggregating L1 data across a number of completed studies, such that the resultant histograms can be used by the computing device to derive probability densities, specifically representing the probability of having a certain value of the desired quantity. Sample frequencies (or priors) can also be computed from this aggregated data, which can be used directly in risk measurement. These estimates may also be used by the computing device in the context of Bayesian risk estimation, wherein the given data/evidence is compared to historical/prior information to generate a posterior risk estimate. Such an implementation would have applications within the anonymization of streaming data, for example.

One possible algorithm for simulating L1 contributions to risk measurement may be implemented as follows: For each data subject in the study and for each L1 quantity to be simulated:

> sample from the probability density functions representing the desired L1 quantity; and
> compute the sample frequency corresponding to the sampled value and assign this value to the data subject.

In practice, there are a number of QIs which, if found in a dataset, may be treated as cross sectional variables - for example, baseline lesion size may be considered in risk measurement for a clinical trial focused on skin cancer, or pregnancy status for female participants. Given a sufficient amount of data, it may be possible to model such quantities using the same general algorithm described above. Bayesian priors may also be used, such that samples or other relationships in the data may be used as evidence to update or generate a posterior estimation of disclosure risk. Such modelling would further reduce analyst workload in terms of data modelling and classification, particularly when such quantities are embedded in complex tabular data structures such as key-value pairs.

Broadly speaking, the longitudinal QIs that tend to enter risk measurement take the form of dates and codes - for example, in clinical data, codified fields related to subject medical history and concomitant medications are present, but in practice other L2 QIs may also be subject to risk measurement, including but not limited to transactional data such as that, for example, associated with financial transactions. As a matter of convention, such L2 quantities will be referred to as "claims" going forward.

In order to simulate the contribution of longitudinal quantities to the average risk, there are two major considerations: 1) Not all individuals will have claims in a given L2 table, and 2) The claims in such a table will be a mixture of common and uncommon quantities. For example, in the case of concomitant medications, many individuals may take aspirin for pain relief, but only some may take an experimental cancer medication.

Certain types of quasi-identifiers pose additional complexities or have implicit or explicit criteria/constraints regarding their simulation. For example, in clinical data, dates pose additional complexities as they must be offset according to the PhUSE dates offsetting algorithm, requiring both the first collected date of each participant, as well as the recruitment period of the study.

Models can be built using an approach similar to that for the cross sectional (L1) variables, wherein subject claims from different studies are aggregated together, whether in a stratified or non-stratified fashion, from which distributions can be drawn representing the number of claims or transactions per participant or individual, as well as the sample frequencies of each claim. These distributions can then be used by the computing device to derive approximate probability density functions for the number of claims and the frequency of each claim, from which each participant receives a simulated number of claims, as well as a simulated prior value for each claim.

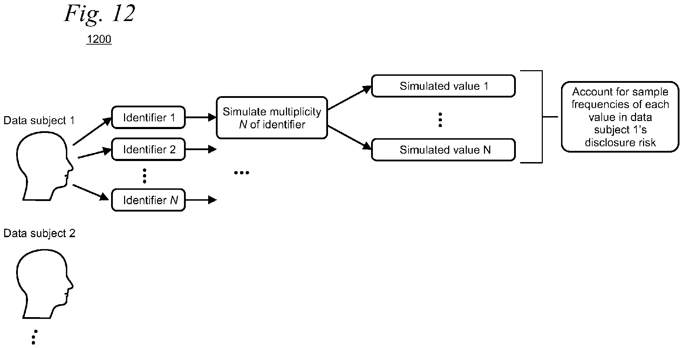

In particular, given a probabilistic mechanism to represent the number of claims per participant, and the frequency of each claim within a broader, representative population, the contribution of these L2 variables may be simulated, as shown by the algorithm presented in chart 1200 in FIG 12.

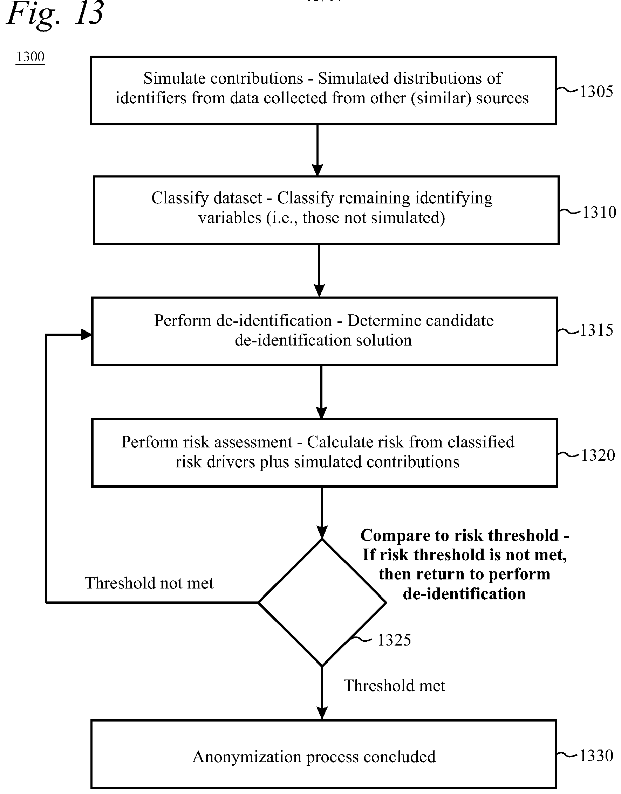

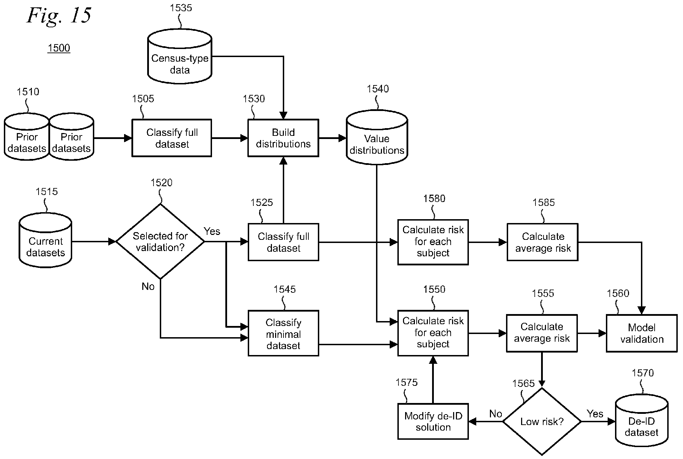

The process described above is illustratively presented in FIGs 13 and 15 of the drawings. For example, in step 1305, in FIG 13, the computing device simulates distributions of identifiers from data collected from other (similar) sources. For example, in some scenarios, such as SIPD (structured individual patient data) from clinical trials, there are known elements to include for risk measurement. If one class of identifiers dominates the manual classification stage, then the use of simulated risk contributions by the computing device reduces the amount of work necessary to classify the identifiers which dominate the classification stage and reduces manual efforts. Furthermore, by simulating the contribution of some of the main drivers of risk, like those that dominate the classification stage, then the requirement of classifying these identifiers is eliminated.

In step 1310, the computing device classifies the remaining identifying variables that were not contained in the simulation of step 1305. The classified identifiers are also used to de-identify to reduce risk below the threshold in subsequent steps. In step 1315, the computing device performs de-identification by determining a candidate de-identification solution. In step 1120, the computing device performs risk assessment by calculating risk from classified risk drivers plus simulated contributions. In step 1325, the computing device compares the risk assessment to a risk threshold. When the comparison indicates that the risk threshold is not met, then the process reverts back to step 1315 in which de-identification is performed. When the comparison indicates that the risk threshold is met, then the anonymization process is concluded, as shown in step 1330.

In other implementations, the selection of the random values can be injected into the step in which the population distribution data associated with the dataset is retrieved. Retrieving population distributions still occurs, but only for the identified actual quasi-identifying fields. Additionally, when applying information values to each quasi-identifying value in the dataset, random counts of longitudinal fields are created, and information values are directly sourced from the distribution rather than quasi-identifying values. Re-identification risk measurement then proceeds as with the previous submission.

Random simulated quasi-identifier values can be applied to a direct-comparison-based risk measurement algorithm. While the previous submissions describe the case of simulated risk contributions applied to and evaluated against an average disclosure risk measurement, the same approach could be used by the computing device to evaluate an expected maximum risk measurement, either through a single run, or as a Monte Carlo simulation. While the use of simulated risk contributions by the device would not identify which records exceed a maximum risk threshold, an expected count of the number of data subjects who would exceed this value could be evaluated.

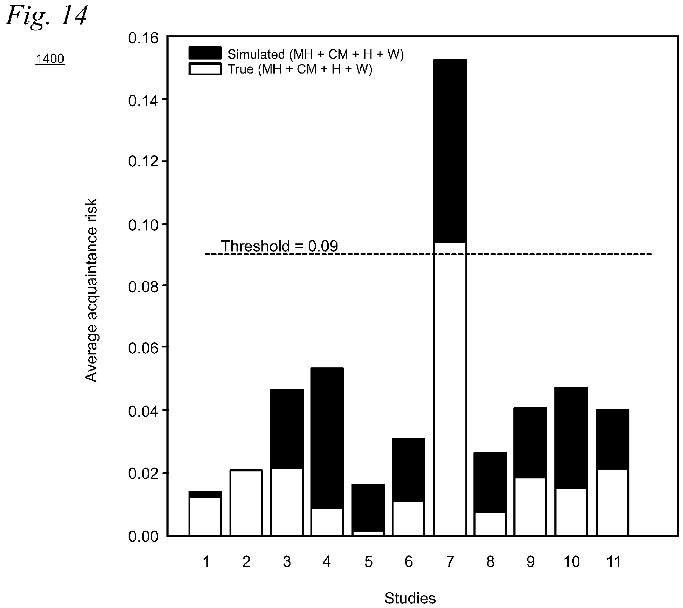

Fig. 14 is a chart 1400 showing an illustrative comparison of the true and simulated average risk measurement values considering patient height, weight, medical codes (e.g., MedDRA HLT) and concomitant medication codes (e.g., 4-digit ATC).

Comparisons of true and simulated average risk values including subject height, weight, medical history codes, and concomitant medication codes are shown in Fig. 14 for a number of real clinical trials datasets. For both data and simulation, verbatim medical terms have been generalized to high-level terms using the MedDRA dictionary, and drug names have been generalized to 4-digit ATC codes. For each study, the reference populations used to determine risk were reflective of the true values determined for each study. The risk measurement values are also scaled assuming a 30% chance that a re-identification or disclosure attack will be performed, which is a reasonable estimate for release of anonymized structured data on a clinical data portal.

In general, the simulated risk values presented in Fig 14 are more conservative with respect to the real values, but in all cases, when the true risk is below threshold, the simulated risk is also below threshold. In some respects, this is an agreeable result, as a systematic underestimation of risk from the simulation would be more problematic from a liability perspective.

Fig. 15 is a flowchart 1500 that shows the overall process flow. In block 1505, full datasets are classified using data from one or more prior datasets 1510. A current dataset 1515 may also be selected for validation as indicated at decision block 1520. If so selected, the data is used to classify a full dataset at block 1525. Population distributions are built at block 1530 using the classified full datasets and/or census-type data 1535. The built distributions are stored as value distributions 1540.

If the current dataset is not selected for validation at decision block 1520, then the data is utilized to classify a minimal dataset at block 1545. The value distributions 1540 and classified minimal dataset are inputs to block 1550 at which risk is calculated for each subject. An average risk is calculated at block 1555 and provided to block 1560, model validation.

If the calculated risk is low (i.e., at or below some predetermined threshold) at decision block 1565, then the subject data is included in a de-identified dataset 1570. If not, then a modified de-identification solution may be implemented at block 1475 and the calculation of subject and average risk is repeated in a loop.

The classified full dataset at block 1425 may also be utilized to calculate risk for each subject at block 1480 and an average risk calculated at block 1485. The calculations may be used for model validation at block 1460, as shown.

The procedure is conservative in nature in that typically, priors are computed on a per-study basis, so drawing them instead from an aggregated sample will actually result in "rare" values becoming rarer on average. Over time, stratifying the sampling according to factors such as condition studied, study indication, and even population demographics may help to improve the robustness and quality of the modelling.

The simulation of quasi-identifiers in risk measurement and mitigation can be further extended to contexts such as incremental/streaming data and risk monitoring. In such circumstances, quasi-identifiers may occur infrequently or sparsely enough in the data that it is not possible to compute robust estimates of their relative contribution to disclosure risk. Accordingly, in such contexts, the use of simulated risk contributions by the computing device of the detected identifiers to could allow for dynamic or real-time disclosure risk calculation and anonymization of data, thereby preventing identity disclosure. Furthermore, the use of periodically updated, probabilistic models also lends itself to Bayesian formulations of disclosure risk, such that new data/evidence can be applied to historical/prior information to generate more accurate posterior risk estimates. A computing device can compare simulated distributions with actual distributions of incremental data to determine whether further disclosure risk control is necessary or whether an existing de-identification strategy is still applicable to the new data. This can save processing in the context of incremental/streaming data.

In the context of incremental data releases, it is possible that earlier data releases may contain less information than later releases, and potentially also fewer types of identifying information than the full data release. For example, an interim clinical dataset may contain incomplete descriptions of patient visits, or less detailed information on medical conditions, treatments, or medications, as compared to the final clinical dataset. In circumstances where only a partial amount of identifying information is available, the computing device can consider the contributions to disclosure risk of both the identifying information recorded in the data, as well as simulated quasi-identifiers for information that has not yet been seen, in order to provide a reasonably accurate estimate of the disclosure risk expected from a full data release.

Given a number of possible identifiers that could be present in a future data release, the computing device may use this information to de-identify the incremental data in a manner that brings the estimated final disclosure risk below threshold, in order to ensure that only a suitable amount of information is disclosed in the incremental release. Likewise, once a more complete dataset becomes available, the computing device can remove any simulated components that have been supplanted by real data and update the disclosure risk using this newly-available information. The complete dataset can then be de-identified by the computing device in a manner that accounts for the new information available for the final data release and is also consistent with the de-identification strategy employed in the previous, incremental release. The computing device can also update the simulated data models and distributions to derive more accurate estimates of disclosure risk and produce updated de-identification strategies for future data releases.

In the context of physical data repositories like relational or non-relational databases, data lakes, etc. the use of simulated quasi-identifiers can serve as an efficient way for a computing device to estimate or anticipate the disclosure risk associated to a given data request. For example, given some amount of quasi-identifying information requested for a number of data subjects, the estimated disclosure risk can be computed by an external or embedded computing device before any actual data access occurs. If the expected disclosure risk of the data is above a specified threshold, the user can be prevented from accessing or downloading the data. The computing device can then simulate the conditions that would result in an estimated disclosure risk which falls below threshold and require the user to confirm that the proposed level of de-identification is acceptable. At which point, the true data can be retrieved from the data repository, de-identified, and provided to the user.

In the context of heterogeneous data pools like data lakes, the use of simulated quasi-identifiers can serve as a more accurate way to estimate the disclosure risk associated to a given data request. The computing device can utilize simulated quasi-identifiers in a manner to account for the various cohorts (i.e. heterogeneity) within the pooled data, to ensure that the expected disclosure risk of the released data is not under-estimated. The computing device can then simulate the conditions that would result in all cohorts with an expected disclosure risk below a specified threshold and require the user to confirm that the proposed level of de-identification is acceptable. Alternatively, the computing device can identify which cohorts have an expected disclosure risk above a specified threshold and prevent the user from accessing or downloading the data.

In the context of secure computation and query-based systems, the use of simulated quasi-identifiers can serve as an efficient way to estimate the disclosure risk associated to a given query or request. The computing device can compute the estimated disclosure risk using simulated quasi-identifiers and select the appropriate subset or all records and de-identification strategy that would meet the disclosure risk requirements and privacy budget of the data recipient is such a system. In this way, simulated quasi-identifiers can ensure that a response to a targeted query is calculated using the subset of data that meets the disclosure controls in an expedited fashion. It will be appreciated that the principles described herein with respect to disclosure risk may be generalized to other metrics of interest in a given use scenario. For example, differential privacy mechanisms and other privacy-preserving techniques may be advantageously configured and/or modified to utilize the present simulated quasi-identifiers to thereby lower disclosure risk.

It may be possible to leverage simulated risk contributions within a computing system that allows for an expedited disclosure risk measurement and mitigation process by minimizing user intervention and domain knowledge / subject matter expertise requirements. In a structured clinical data context, the "core" quasi-identifying information that drives disclosure risk tends to be spread across multiple locations in a dataset. Identifying and collecting this information can be a time-consuming process and requires considerable domain knowledge. These fields tend to benefit the most from simulated risk contributions. Conversely, fields such as data subject age, gender, and other demographics information tends to be localized to a few clearly-marked fields and tables.

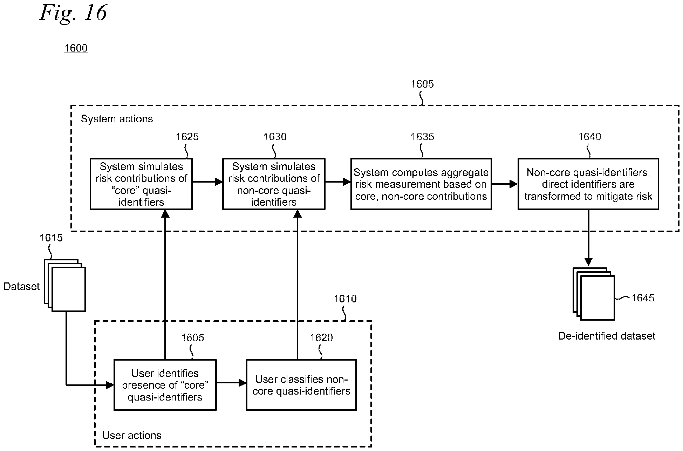

Fig. 16 is a diagram of an illustrative example of such an expedited risk measurement and mitigation system 1600 that is configured to combine simulated risk contributions and actual risk contributions computed from a dataset. The system utilizes system actions 1605 and user actions 1610 to perform risk mitigation by focusing on transforming the user-identified quasi-identifiers. This techniques removes, in typical implementations, the need for the user to transform, or even identify, any of the "core" identifiers in the data.

As shown at block 1610, the system enables the user to identify which of the "core" quasi-identifiers for which they wish to account using simulated risk contributions from a dataset 1615. The system 1600 then requests that the

**EP 3 779 757 B1**

remaining quasi-identifying information such as age, gender, race, ethnicity, etc. be identified and classified by the user, as indicated at block 1620. The system can perform a disclosure risk measurement by combining simulated risk contributions for the "core" quasi-identifiers (block 1625) with risk contributions from the remaining user-identified and -classified fields (block 1630). An aggregated risk is computed by the system based on core and non-core contributions (block 1635). The system transforms non-core quasi-identifiers and direct identifiers to mitigate risk (block 1640) and a de-identified dataset 1645 may be exported by the system.

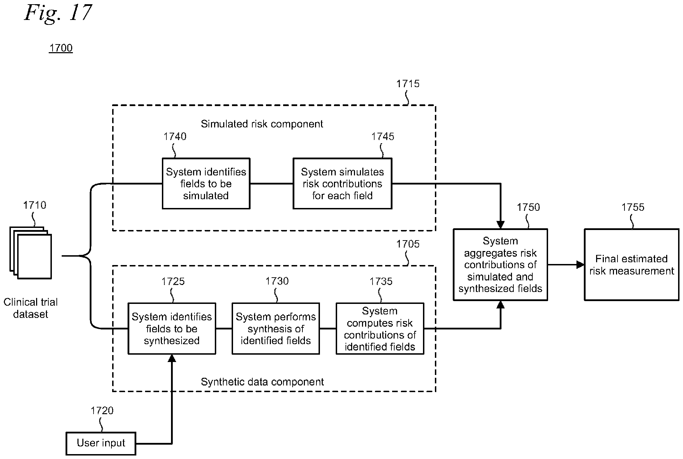

Fig 17 is a diagram of an illustrative system 1700 which is configured to combine simulated risk contributions with synthetic data. The system may be configured to simulate the contribution of quasi-identifiers to disclosure risk, in some embodiments of the present invention, by programmatically generating synthetic data using a synthetic data component 1705. The synthetic data may be used to replace certain fields in a clinical trial dataset 1710 containing personally-identifying information. The system aggregates the synthetic data with simulated risk contributions from a simulated risk component 1715.

In system 1700, fields considered under the scope of simulated risk contributions do not need to be identified or otherwise manipulated by the user, as the statistical models underpinning the simulation process already account for their contribution to disclosure risk. Similarly, with the system accounting for the effects of synthetic data on the total re-identification risk, user input at block 1720 required to identify the fields to be synthesized may be minimized or reduced to zero in some cases. As shown at block 1725, if there are certain types of fields present in the data with regular structures and known upper and lower bounds such as dates, the system may autonomously identify such fields based on their content and formatting and synthesize the identified fields, accordingly, at block 1730. The system computes risk contributions of the identified fields at block 1735.

In the simulated risk component 1715, the system identifies fields to be simulated at block 1740 and simulates risk contributions for each field at block 1745. The outputs of the simulated risk component and synthetic data component 1705 are aggregated at block 1750 to produce a final estimated risk estimate 1755.

Synthetic data may be generated by the synthetic data component to emulate certain types of personal information such as clinical visit dates, treatment dates, etc., which conventionally requires stronger underlying assumptions and prior knowledge to effectively simulate. For example, in the case of dates recorded in a clinical trial dataset, the start and end dates of the trial would typically be needed to properly understand the scope of the risk contribution simulation, as well as the length of the period in which participants are recruited into the study. Synthetic data instead advantageously allows for the substitution of real personal information with generated data which possesses similar statistical properties to the original data - such as trends within a given field, and its correlations to other fields - but is not attributable back to the original data subjects. In this way, the system can combine synthetic data and simulated risk contributions together to produce a robust estimate of the disclosure risk associated with the dataset, with a minimum of user intervention.

The use of simulated risk contributions can also be extended beyond anonymizing structured data to encompass a system which performs disclosure risk measurement and anonymization of unstructured data, such as clinical study reports (CSRs). In a clinical context, instances of personal information such as patient demographics, medical histories, drug codes, etc. are embedded in unstructured documents in a manner that oftentimes requires a lengthy initial phase of detection leveraging automated or semi-automated natural language processing (NLP) technologies before risk measurement and mitigation can begin. Moreover, a suitably high recall of this embedded personal information is required before the risk measurement and de-identification processes produce reliable and accurate assessments of the original and mitigated disclosure risk. In this context, a system combining simulated risk contributions and modern NLP technologies, using unstructured data as input, may allow for a substantial decrease in the amount of time and effort required to reach a state of readiness for risk measurement and mitigation.

Given a known number of data subjects in a particular unstructured text, the system may produce simulated risk contributions for personal information such as demographics, medical history codes, concomitant medication codes, etc. Therefore, the remaining detection process would be limited to capturing fields such as dates which feature regular and repeating formats and content, and which can be captured almost fully automatically by leveraging NLP technologies embedded within the system, with minimal additional user input or effort. Simulated quasi-identifier distributions and models can also be used to improve the detection of personally-identifying information in unstructured data, by using the simulated distributions as a form of gazetteer to inform the natural language processing technologies. By combining these simulated risk contributions together with the remaining detected personally-identifying information , the system may compute an estimate of disclosure risk, with risk mitigation focusing on transforming the detected personally-identifying information in a way that achieves a suitably low disclosure risk.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

# EP 3 779 757 B1

## Claims

1. A computer-implemented method for de-identifying data in a dataset containing personally identifiable information, comprising the steps of:

   creating a list of quasi-identifying fields in a data subject profile in the dataset containing personally identifiable information;
   creating, by respectively selecting random simulated quasi-identifying values for each quasi-identifying field in the list, a population distribution that includes the simulated quasi-identifying values in the quasi-identifying fields and which approximates a distribution of the dataset;
   retrieving the created population distribution that includes the simulated quasi-identifying values in the quasi-identifying fields from a storage device;
   determining a candidate de-identification solution, applying the solution to the simulated quasi-identifying values;
   calculating a disclosure risk measurement of re-identification of the personally identifiable information for one or more individuals or entities represented in the dataset using the de-identified simulated quasi-identifying values for the quasi-identifying fields in the list;
   comparing the disclosure risk measurement to a risk threshold; if the risk threshold is met then de-identifying the dataset with the solution and providing the de-identified dataset to a user; if the risk threshold is not met then repeating the determining, applying, calculating and comparing steps until the risk threshold is met.

2. The method of claim 1 in which the created population distribution of quasi-identifying values uses data from one or more pre-existing data sources that are external to the computing device.

3. The method of claim 1 further including assigning an information score to each quasi-identifying value of the quasi-identifying fields associated with the data subject profile.

4. The method of claim 3 further including aggregating the assigned information scores of the quasi-identifying values for the data subject profile into an aggregated information value.

5. The method of claim 4 further including calculating an anonymity value from the aggregated information scores and a size of a population associated with the dataset.

6. The method of claim 5 in which the calculated disclosure risk measurement uses the anonymity value.

7. The method of claim 3 wherein the information score is defined by a number of information binary bits provided by the quasi-identifying value.

8. The method of claim I in which the population distribution is a single variable or multi-variable distribution, which maps value to a probability of an individual having that value.

9. The method of claim I further including randomly selecting a random count of longitudinal quasi-identifying values for each data subject and either sharing a single count across all longitudinal quasi-identifying values or using separate counts for each longitudinal quasi-identifying value in the population distribution, in which a longitudinal quasi-identifying value represents a quasi-identifying value that is associate with an unknown number.

10. The method of claim 9 further including selecting quasi-identifying values for each field with a multiplicity equal to the associated randomly-selected count.

11. The method of claim 9 in which the counts are included in a distribution of numbers of longitudinal quasi-identifying values held by subjects in the population, the distribution being sourced from a dataset that is external to the computing device.

12. The method of claim 1 in which the data subject profile comprises a record, the method further including aggregating information scores within the record, aggregating information score from related records from within a child table associated with the record, and aggregating information score from the child table.

13. The method of claim 1 further including using true quasi-identifying values in a true population distribution, in which the true quasi-identifying values are not simulated, and the true population distribution is distinct from the created population database.

**Patentansprüche**

1. Computer-implementiertes Verfahren zur De-Identifizierung von Daten in einem Datensatz, der persönlich identifizierbare Informationen enthält, mit den folgenden Schritten:

   Erstellen einer Liste von quasi-identifizierenden Feldern in einem Datensubjektprofil in dem Datensatz, der persönlich identifizierbare Informationen enthält:

   Erzeugen einer Bevölkerungsverteilung, die die simulierten quasi-identifizierenden Werte in den quasi-identifizierenden Feldern enthält und die sich einer Verteilung des Datensatzes annähert, indem jeweils zufällige simulierte quasi-identifizierende Werte für jedes quasi-identifizierende Feld in der Liste ausgewählt werden;
   Abrufen der erzeugten Bevölkerungsverteilung, die die simulierten quasi-identifizierenden
   Werte in den quasi-identifizierenden Feldern aus einem Speichergerät enthält:

   Bestimmen einer Kandidatenlösung für die De-Identifizierung, Anwenden der Lösung auf die simulierten quasi-identifizierenden Werte;
   Berechnen einer Offenlegungsrisikomessung der Re-Identifizierung der persönlich identifizierbaren Informationen für eine oder mehrere Personen oder Einheiten, die in dem Datensatz repräsentiert sind, unter Verwendung der de-identifizierten simulierten quasi-identifizierenden Werte für die quasi-identifizierenden Felder in der Liste

   zum Vergleich der Offenlegungsrisikomessung mit einem Risikoschwellenwert; wenn der Risikoschwellenwert erfüllt ist, dann De-Identifizierung des Datensatzes mit der Lösung und Bereitstellung des de-identifizierten Datensatzes für einen Benutzer; wenn der Risikoschwellenwert nicht erfüllt ist, dann Wiederholung der Schritte des Bestimmens, Anwendens, Berechnens und Vergleichens, bis der Risikoschwellenwert erfüllt ist.

2. Verfahren nach Anspruch 1, bei dem die erzeugte Bevölkerungsverteilung von quasi-identifizierenden Werten Daten aus einer oder mehreren bereits existierenden Datenquellen verwendet, die außerhalb des Rechenzentrums liegen.

3. Verfahren nach Anspruch 1, bei dem ferner jedem quasi-identifizierenden
   Wert der quasi-identifizierenden Felder, die mit dem Profil des Datensubjekts verbunden sind, ein Informationswert zugewiesen wird.

4. Das Verfahren nach Anspruch 3 umfasst ferner das Aggregieren der zugewiesenen Informationswerte der quasi-identifizierenden Werte für das Datensubjektprofil zu einem aggregierten Informationswert.

5. Das Verfahren nach Anspruch 4 umfasst ferner die Berechnung eines Anonymitätswertes aus den aggregierten Informationswerten und einer Größe einer mit dem Datensatz verbundenen Bevölkerung.

6. Verfahren nach Anspruch 5, bei dem die berechnete Offenlegungsrisikomessung den Anonymitätswert verwendet.

7. Verfahren nach Anspruch 3, wobei der Informationswert durch eine Anzahl von binären Informationsbits definiert ist, die durch den quasi-identifizierenden Wert bereitgestellt werden.

8. Verfahren nach Anspruch 1, bei dem die Bevölkerungsverteilung eine Einzelvariablen- oder Multivariablenverteilung ist, die einen Wert auf eine Wahrscheinlichkeit abbildet, dass ein Individuum diesen Wert hat.

9. Verfahren nach Anspruch I, das ferner die zufällige Auswahl einer Zufallszählung von quasi-identifizierenden Longitudinalwerten für jedes Datensubjekt und entweder die gemeinsame Nutzung einer einzigen Zählung für alle quasi-identifizierenden Longitudinalwerte oder die Verwendung separater Zählungen für jeden quasi-identifizierenden Longitudinalwert in der Bevölkerungsverteilung umfasst, wobei ein quasi-identifizierender Longitudinalwert einen quasi-identifizierenden Wert darstellt, der mit einer unbekannten Zahl assoziiert ist.

10. Das Verfahren nach Anspruch 9 umfasst ferner die Auswahl von quasi-identifizierenden Werten für jedes Feld mit einer Multiplizität, die gleich der zugehörigen zufällig ausgewählten Anzahl ist.

11. Verfahren nach Anspruch 9, bei dem die Zählungen in einer Verteilung der Anzahl von longitudinalen quasi-identifizierenden Werten enthalten sind, die von Subjekten in der Bevölkerung gehalten werden, wobei die Verteilung aus einem Datensatz stammt, der sich außerhalb des Rechenzentrums befindet.

12. Verfahren nach Anspruch 1, bei dem das Profil des Datensubjekts einen Datensatz umfasst, wobei das Verfahren ferner das Aggregieren von Informationswerten innerhalb des Datensatzes, das Aggregieren von Informationswerten aus verwandten Datensätzen innerhalb einer dem Datensatz zugeordneten untergeordneten Tabelle und das Aggregieren von Informationswerten aus der untergeordneten Tabelle umfasst.

13. Das Verfahren nach Anspruch 1 umfasst ferner die Verwendung echter quasi-identifizierender Werte in einer echten Bevölkerungsverteilung, wobei die echten quasi-identifizierenden Werte nicht simuliert werden und die echte Bevölkerungsverteilung sich von der erzeugten Bevölkerungsdatenbank unterscheidet.

## Revendications

1. Procédé mis en œuvre par ordinateur pour désidentifier des données dans un ensemble de données contenant des informations personnellement identifiables, comprenant les étapes :

   de création d'une liste de champs quasi-identifiants dans un profil de sujet de données dans l'ensemble de données contenant des informations personnellement identifiables ;
   de création, en sélectionnant respectivement des valeurs quasi-identifiantes simulées aléatoires pour chaque champ quasi-identifiant dans la liste, d'une distribution de population qui comporte les valeurs quasi-identifiantes simulées dans les champs quasi-identifiants et qui se rapproche d'une distribution de l'ensemble de données ;
   de récupération de la distribution de population créée qui comporte les valeurs quasi-identifiantes simulées dans les champs quasi-identifiants à partir d'un dispositif de stockage :

   de détermination d'une solution de désidentification candidate, d'application de la solution aux valeurs quasi-identifiantes simulées ;
   de calcul d'une mesure de risque de divulgation de ré-identification des informations personnellement identifiables pour un ou plusieurs individus ou entités représentés dans l'ensemble de données à l'aide des valeurs quasi-identifiantes simulées désidentifiées pour les champs quasi-identifiants dans la liste ;
   de comparaison de la mesure de risque de divulgation à un seuil de risque ; si le seuil de risque est atteint, de désidentification alors de l'ensemble de données à l'aide de la solution et de fourniture de l'ensemble de données désidentifié à un utilisateur ; si le seuil de risque n'est pas atteint, de reproduction alors des étapes de détermination, d'application, de calcul et de comparaison jusqu'à ce que le seuil de risque soit atteint.

2. Procédé selon la revendication 1, dans lequel la distribution de population créée de valeurs quasi-identifiantes utilise des données provenant d'une ou plusieurs sources de données préexistantes qui sont externes au dispositif informatique.

3. Procédé selon la revendication 1, comportant en outre l'attribution d'un score d'informations à chaque valeur quasi-identifiante des champs quasi-identifiants associés au profil de sujet de données.

4. Procédé selon la revendication 3, comportant en outre l'agrégation des scores d'information attribués des valeurs quasi-identifiantes pour le profil de sujet de données en une valeur d'information agrégée.

5. Procédé selon la revendication 4, comportant en outre le calcul d'une valeur d'anonymat à partir des scores d'informations agrégées et d'une taille d'une population associée à l'ensemble de données.

6. Procédé selon la revendication 5, dans lequel la mesure de risque de divulgation calculée utilise la valeur d'anonymat.

7. Procédé selon la revendication 3, dans lequel le score d'informations est défini par un nombre de bits binaires d'informations fournis par la valeur quasi-identifiante.

**8.** Procédé selon la revendication 1, dans lequel la distribution de la population est une distribution à une seule variable ou à plusieurs variables, qui mappe une valeur sur une probabilité qu'un individu ait cette valeur.

**9.** Procédé selon la revendication 1, comportant en outre la sélection aléatoire d'un comptage aléatoire de valeurs quasi-identifiantes longitudinales pour chaque sujet de données et soit le partage d'un comptage unique sur toutes les valeurs quasi-identifiantes longitudinales, soit l'utilisation de comptages séparés pour chaque valeur quasi-identifiante longitudinale dans la distribution de la population, dans laquelle une valeur quasi-identifiante longitudinale représente une valeur quasi-identifiante associée à un nombre inconnu.

**10.** Procédé selon la revendication 9, comprenant en outre la sélection de valeurs quasi-identifiantes pour chaque champ avec une multiplicité égale au comptage associé sélectionné de manière aléatoire.

**11.** Procédé selon la revendication 9, dans lequel les comptages sont compris dans une distribution de nombres de valeurs quasi-identifiantes longitudinales détenues par des sujets dans la population, la distribution provenant d'un ensemble de données qui est externe au dispositif informatique.

**12.** Procédé selon la revendication 1, dans lequel le profil de sujet de données comprend un enregistrement, le procédé comportant en outre l'agrégation de scores d'informations dans l'enregistrement, l'agrégation de scores d'informations à partir d'enregistrements liés provenant d'une table enfant associée à l'enregistrement, et l'agrégation de scores d'informations à partir de la table enfant.

**13.** Procédé selon la revendication 1 comportant en outre l'utilisation de vraies valeurs quasi-identifiantes dans une vraie distribution de population, dans laquelle les vraies valeurs quasi-identifiantes ne sont pas simulées, et la vraie distribution de population est distincte de la base de données de population créée.

## Fig. 1

|  |  |  |
|---|---|---|
| **ID** | **Date Of Birth** | **Gender** |
| 1 | January 1, 1970 | Male |

102

| **Date** | **Vaccine** |
|---|---|
| April 10, 2010 | Tetanus |
| November 1, 2012 | Flu shot |
| November 8, 2013 | Flu shot |

112

| **Date** | **Diagnosis** |
|---|---|
| April 10, 2010 | Broken Leg |
| February 14, 2014 | Infection |
| June 8, 2015 | Hernia |

104

| **Treatment** | **Medication** |
|---|---|
| Cast Leg |  |
| Medication | Pain Killer |
| Set bone |  |

106

| **Treatment** | **Medication** |
|---|---|
| Medication | Anti-biotics |

108

| **Treatment** | **Medication** |
|---|---|
| Hernia Repair |  |
| Medication | Pain Killers |
| Bed rest |  |

110

```
┌─────────────────────────────┐
│  Retrieve population         │
│  distribution associated     │
│  with dataset                │
│           202                │
└─────────────────────────────┘
              │
              ▼
┌─────────────────────────────┐
│  Assign an information value │
│  to each quasi-identifying   │
│  value in dataset            │
│           204                │
└─────────────────────────────┘
              │
              ▼
┌─────────────────────────────┐
│  Aggregate information       │
│  scores                      │
│           206                │
└─────────────────────────────┘
              │
              ▼
┌─────────────────────────────┐
│  Calculate anonymity         │
│           208                │
└─────────────────────────────┘
              │
              ▼
┌─────────────────────────────┐
│  Calculate re-identification │
│  metric                      │
│           210                │
└─────────────────────────────┘
              │
              ▼
┌─────────────────────────────┐
│  Create aggregate result     │
│           212                │
└─────────────────────────────┘
```

*Fig. 2*

*Fig. 3*

302

| ID | Data |
|----|------|
| 1 | ... |
| 2 | ... |
| 3 | ... |

304

308　　306

| ID | CID | Data |
|----|-----|------|
| 1 | A | ... |
| 1 | B | ... |
| 2 | C | ... |
| 2 | D | ... |

312　　310

| ID | CID2 | Data |
|----|------|------|
| 1 | w | ... |
| 1 | x | ... |
| 1 | y | ... |
| 3 | z | ... |

*Fig. 4*

302

| ID | Data |
|----|------|
| 1  | ...  |
| 2  | ...  |
| 3  | ...  |

404

| ID | CID | Data |
|----|-----|------|
| 1  | A   | ...  |
| 1  | B   | ...  |

| ID | CID2 | Data |
|----|------|------|
| 1  | w    | ...  |
| 1  | x    | ...  |
| 1  | y    | ...  |

306

| ID | CID | Data |
|----|-----|------|
| 1  | A   | ...  |
| 1  | B   | ...  |
| 2  | C   | ...  |
| 2  | D   | ...  |

310

| ID | CID2 | Data |
|----|------|------|
| 1  | w    | ...  |
| 1  | x    | ...  |
| 1  | y    | ...  |
| 3  | z    | ...  |

*Fig. 5*

502

| ID | QI 1 | QI 2 | QI 3 | Pseudo QI |
|----|------|------|------|-----------|
| 1 | 3 | 4 | 5 | Max( 3 , 4 , 5 , 6 , 7 , 8 , 3 , 4 , 6 ) |

504

| ID | QI A | QI B | QI C |
|----|------|------|------|
| 1 | 6 | 7 | 8 |
| 1 | 3 | 4 | 6 |

*Fig. 6*

| Patient ID | Age | ZIP3 | Gender | DX | Total |
|------------|-----|------|--------|-----|-------|
| 1 | 25 | 901 | Female | 650 | |

|  | 3 bits | 3 bits | 1 bits | 4 bits | 11 bits |
|--|--------|--------|--------|--------|---------|
| Frequency/<br>Probability: | 1/8 | 1/8 | 1/2 | 1/16 | 1/2048 |

1/8   1/64   1/128   1/2048

*Fig. 7*

700

*Fig. 8*

**800**

*Fig. 9*

900

*Fig. 10*

*Fig. 11*

1100

Receive data from user or client

Classify data using automatic and/or manual approaches

Aggregate data, extract identifying variables to model

Derive probabilistic representations of the variety or multiplicity of each identifying variable

Retain models for use in future applications

## Fig. 12

1200

*Fig. 13*

1300

| Simulate contributions - Simulated distributions of identifiers from data collected from other (similar) sources | ~1305 |

| Classify dataset - Classify remaining identifying variables (i.e., those not simulated) | ~1310 |

| Perform de-identification - Determine candidate de-identification solution | ~1315 |

| Perform risk assessment - Calculate risk from classified risk drivers plus simulated contributions | ~1320 |

**Compare to risk threshold - If risk threshold is not met, then return to perform de-identification**

Threshold not met

~ 1325

Threshold met

| Anonymization process concluded | ~1330 |

*Fig. 14*

1400

Fig. 15

*Fig. 16*

1600

1605

System actions

1625

System simulates risk contributions of "core" quasi-identifiers

1630

System simulates risk contributions of non-core quasi-identifiers

1635

System computes aggregate risk measurement based on core, non-core contributions

1640

Non-core quasi-identifiers, direct identifiers are transformed to mitigate risk

1615

Dataset

1610

1605

User identifies presence of "core" quasi-identifiers

1620

User classifies non-core quasi-identifiers

User actions

1645

De-identified dataset

*Fig. 17*

1700

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62885435
- US 2018114037 A1
- US 2017177907 A1
- US 2017103232 A1